**Europäisches Patentamt**

**European Patent Office**

**Office européen des brevets**

(19)

(11) Veröffentlichungsnummer: **0 213 219 B1**

(12) **EUROPÄISCHE PATENTSCHRIFT**

(45) Veröffentlichungstag der Patentschrift:
25.07.90

(21) Anmeldenummer: 85110730.0

(22) Anmeldetag: 27.08.85

(51) Int. Cl.⁵: **A01F 15/00, B65G 15/34, B65G 15/36**

(54) **Pressband für Rundballenpressen.**

(43) Veröffentlichungstag der Anmeldung:
**11.03.87 Patentblatt 87/11**

(45) Bekanntmachung des Hinweises auf die Patenterteilung:
**25.07.90 Patentblatt 90/30**

(84) Benannte Vertragsstaaten:
**AT BE CH DE FR GB IT LI LU NL SE**

(56) Entgegenhaltungen:
**EP-A- 0 096 929**
**DE-A- 2 114 006**
**DE-A- 3 016 674**
**FR-A- 1 238 809**

**FÖRDERN UND HEBEN, Band 33, Nr. 2, Februar 1983, Seiten 102-103, Krausskopf-Verlag fuer Wirtschaft, Aschaffenburg, Mainz, DE; U. PLAMENIK: "Kevlar kontra Stahl in Fördergurten"**

(73) Patentinhaber: **Jäger, Arnold, Gehrbergsweg 6A, D-3167 Burgdorf - Ramlingen(DE)**

(72) Erfinder: **Jäger, Arnold, Gehrbergsweg 6A, D-3167 Burgdorf - Ramlingen(DE)**

(74) Vertreter: **Depmeyer, Lothar, Auf der Höchte 30, D-3008 Garbsen 1(DE)**

## Beschreibung

Die Erfindung betrifft eine Rundballenpresse für Heu, Stroh oder ähnliches Erntegut mit die Rollkammer umschließenden, umlaufenden, zum Drehen des Gutes dienenden, im wesentlichen aus Gummi oder gummiähnlichen Kunststoffen bestehenden Bändern, die einander parallele, in Bandlängsrichtung verlaufende, zwirnartige, fadenförmige Verstärkungseinlagen aufweisen, die Kettfäden eines Gewebes sind, welches auch quer zu den Kettfäden verlaufende und zwischen den Kettfäden S-förmig hindurchgeführte Schußfäden aufweist.

Die in üblicher Weise fahrbaren Rundballenpressen haben Zuführungseinrichtungen, die das lose zufließende Erntegut aufnehmen und der Rollkammer zuleiten. Hier wird das Erntegut zum Umlaufen gebracht und mit fortdauernder Materialzuführung in Form eines schichtweise gewickelten Rollballens verdichtet. Dabei kommt den erwähnten Bändern eine besondere Bedeutung zu, weil sie der Führung und Verdichtung des Gutes dienen.

Hier ist es nicht möglich, Bänder zu verwenden, die sich über die Breite der Presse erstrecken; vielmehr werden schmale Bänder benutzt, von denen mehrere über die Breite der Presse verteilt angeordnet werden müssen. Eine solche Ausführung bringt auch den Nachteil mit sich, daß die einzelnen Bänder geführt werden müssen bzw. Maßnahmen vorzusehen sind, die eine gegenseitige Berührung der Bänder ausschließen. Ein Auflaufen der einzelnen Bänder kann dabei zu Wärmebildungen führen, die einen Brand zur Folge haben können.

Bei den bekannten Rundballenpressen der eingangs erwähnten Art (DE-A 3 016 674) sind die Verstärkungseinlagen in Einzelanordnung vorgesehen, zudem macht dieser bekannte Vorschlag keine Vorschriften im Hinblick auf die Drehungsrichtung der Kettfäden. Demgemäß ergibt sich bei diesen bekannten Rundballenpressen keine Möglichkeit, allein schon aufgrund des Aufbaues seiner Bänder eine verbesserte Seitenführung der Bänder zu bewirken, um so eine gegenseitige Berührung benachbarter Bänder auszuschließen.

Es ist zwar bei Förderbändern (DE-A 2 114 006) bekannt, für einander benachbarte Verstärkungseinlagen Kabel mit unterschiedlichen Drehungsrichtungen vorzusehen, diese sind jedoch nicht paarweise in der Art zusammengefaßt, daß bei jedem Paar unterschiedliche Drehungsrichtungen gegeben sind und zudem jedes Paar von den Schußfäden umschlungen ist in der Weise, daß die Schußfäden jeweils zwischen zwei benachbarten Paaren S-förmig hindurchgeführt sind. Außerdem werden Förderbänder im Regelfalle einzeln betrieben und nicht nahe beieinander in Parallelstellung derart, daß eine Brandgefahr entstehen kann.

Aufgrund der Erfindung sollen die Nachteile der eingangs erwähnten Rollpressen ausgeschaltet werden; der Erfindung liegt daher die Aufgabe zugrunde, die eingangs genannten Rollpressen so auszubilden, daß der Aufwand für die Seitenführung der einzelnen Bänder verringert und demgemäß eine verbesserte Führung und Pressung des Erntegutes möglich ist, ohne befürchten zu müssen, daß zu hohe Werkstofftemperaturen auftreten, die einen Brand verursachen können.

Diese Aufgabe wird erfindungsgemäß durch die im Kennzeichnungsteil des Patentanspruchs 1 beschriebenen Merkmale gelöst. Dabei ist es zweckmäßig, wenn die Kettfäden zumindest vorwiegend aus Aramid bestehen und die benachbarten Kettfäden verschiedener, nebeneinanderliegender Paare unterschiedliche Drehungsrichtungen haben.

Demgemäß werden somit gewissermaßen stets zwei Verstärkungseinlagen zu einem Paar zusammengefaßt, das vom benachbarten Paar durch die Kettfäden getrennt ist. Der Einfluß der zwangsläufig bei den Verstärkungseinlagen gegebenen Drehungsrichtungen wird somit ganz aufgehoben. Der Aufwand für die Seitenführung der einzelnen Bänder kann daher auch sehr gering gehalten werden.

Ein Ausführungsbeispiel der Erfindung ist in der Zeichnung dargestellt. Es zeigen:

Fig. 1 eine Rundballenpresse für Heu und Stroh in schematischer Darstellung in der Seitenansicht,
Fig. 2 einen Querschnitt durch ein Band für die Presse gemäß Fig. 1 und
Fig. 3 eine Draufsicht auf die Verstärkungseinlagen des Bandes gemäß Fig. 2 (Teildraufsicht)

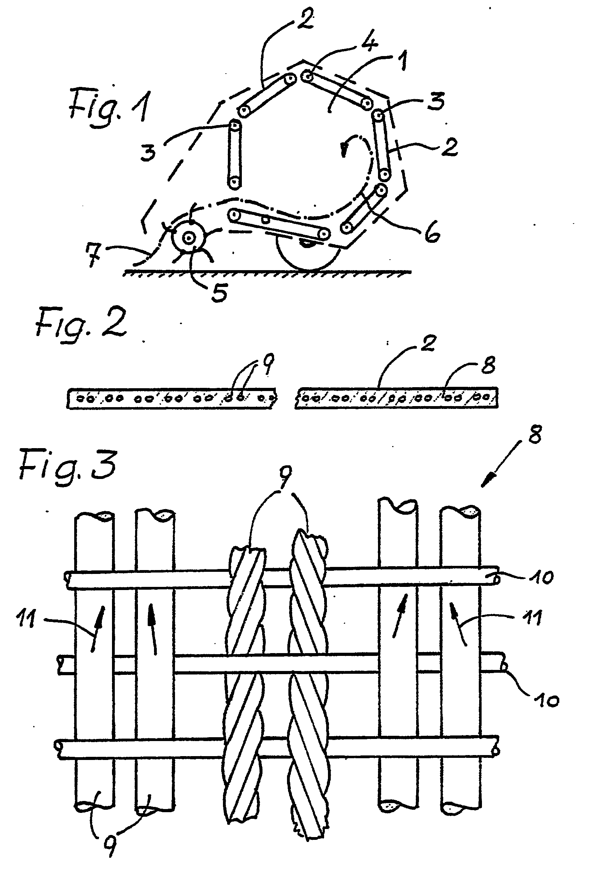

Die Rundballenpresse gemäß Fig. 1 weist eine Rollkammer 1 auf, deren am Umfang gelegene Wandungen von endlosen, bzw. durch Verbinder endlos gemachten Bändern 2 gebildet sind. Ihre Antriebs- und Umlenkscheiben sind mit 3 bezeichnet; die Bänder 2 bewegen sich dabei in Aufrollrichtung und demgemäß erstrecken sich die Achsen 4 der Antriebs- und Umlenkscheiben 3 in Querrichtung der Presse. Die Bänder 2 erstrecken sich zudem nicht über die Pressenbreite, vielmehr sind über die Pressenbreite verteilt mehrere Bänder 2 mit gleichachsig angeordneten Scheiben 3 vorgesehen. Dabei wird vorzugsweise auch für alle in Querrichtung hintereinander angeordneten Bänder 2 ein walzenartiges Antriebs- bzw. Umlenkelement benutzt.

Ein vorgeschalteter Aufsammler 5 fördert das aufgenommene Gut 6 in kontinuierlichem Strom im Sinne der gestrichelten Linie 7 in die Rollkammer 1. Dort erfährt das Gut 6 eine Drehung und – schließlich nach kreisender Bewegung zu einer Verdichtung zu einem zylindrischen Ballen, der durch Abklappen des Hinterteils der Presse entfernt werden kann.

Die flachen Bänder 2 haben in ihrer neutralen Zone eine sich über ihre Breite erstreckende Gewebeeinlage 8, die festhaftend mit den Gummi oder gummiähnlichen Kunststoff des Bandkörpers verbunden ist. Diese Gewebeeinlage besteht aus paarweise angeordneten Kettfäden 9, die sich in Längsrichtung der Bänder, also in Drehrichtung des Gutes 1 erstrecken. Der Gewebeverband wird durch Schussfäden 10 sichergestellt, die je die beiden zusammengehörigen Kettfäden 9 umfassen. Aus Gründen der einfacheren Darstellung sind dabei die aussen gelegenen Paare der Kettfäden 9 als aussen glatte Elemente wiedergegeben.

Die Kettfäden 9 sind Cordfäden nach Art eines Zwirns in der Weise, dass die nebeneinander liegenden Kettfäden bei gleicher Drehungszahl unterschiedliche Drehungsrichtungen haben, die bei den aussen gelegenen Kettfäden 9 durch Pfeile 11 angezeigt sind. Die Drehungsrichtungen bei den Kettfäden 9 benachbarter Paare ist ebenfalls unterschiedlich, sie kann auch innerhalb des Verbandes jedes Kettfadens 9 wiederum gegeben sein.

Es sei nocht erwähnt, dass die Kettfäden hochfest auszuführen sind und demgemäss vorzugsweise aus der Gruppe der Aramide auszuwählen sind, während für die Schussfäden normale Polyamidfasern benutzt werden.

## Patentansprüche

1. Rundballenpresse für Heu, Stroh oder ähnliches Erntegut mit die Rollkammer umschließenden, umlaufenden, zum Drehen des Gutes dienenden, im wesentlichen aus Gummi oder gummiähnlichen Kunststoffen bestehenden Bändern, die einander parallele, in Bandlängsrichtung verlaufende, zwirnartige, fadenförmige Verstärkungseinlagen aufweisen, die Kettfäden (9) eines Gewebes sind, welches auch quer zu den Kettfäden (9) verlaufende und zwischen den Kettfäden (9) S-förmig hindurchgeführte Schußfäden (10) aufweist, dadurch gekennzeichnet, daß im wesentlichen die halbe Anzahl der Verstärkungseinlagen eine Drehungsrichtung aufweist, während die übrigen Verstärkungseinlagen die entgegengesetzte Drehungsrichtung haben, daß die Kettfäden (9) paarweise zusammengefaßt sind und die Kettfäden eines Paares unterschiedliche Drehungsrichtungen haben, und daß die Schußfäden (10) jeweils zwischen zwei benachbarten Paaren von Kettfäden (9) S-förmig hindurchgeführt sind.

2. Presse nach Anspruch 1, dadurch gekennzeichnet, daß die benachbarten Kettfäden (9) verschiedener, nebeneinanderliegender Paare unterschiedliche Drehungsrichtungen haben.

3. Presse nach Anspruch 1, dadurch gekennzeichnet, daß die Kettfäden (3) zumindest vorwiegend aus Aramid bestehen.

4. Bänder für eine Rundballenpresse nach Anspruch 1, die im wesentlichen aus Gummi oder gummiähnlichen Kunststoffen bestehen, die einander parallele, in Bandlängsrichtung verlaufende, zwirnartige, fadenförmige Verstärkungseinlagen aufweisen, die Kettfäden (9) eines Gewebes sind, welches auch quer zu den Kettfäden (9) verlaufende und zwischen den Kettfäden (9) S-förmig hindurchgeführte Schußfäden (10) aufweist, dadurch gekennzeichnet, daß im wesentlichen die halbe Anzahl der Verstärkungseinlagen eine Drehungsrichtung aufweist, während die übrigen Verstärkungseinlagen die entgegengesetzte Drehungsrichtung haben, daß die Kettfäden (9) paarweise zusammengefaßt sind und die Kettfäden eines Paares unterschiedliche Drehungsrichtungen haben, und daß die Schußfäden (10) jeweils zwischen zwei benachbarten Paaren von Kettfäden (9) S-förmig hindurchgeführt sind.

5. Bänder nach Anspruch 4, dadurch gekennzeichnet, daß die benachbarten Kettfäden (9) verschiedener, nebeneinanderliegender Paare unterschiedliche Drehungsrichtungen haben.

6. Bänder nach Anspruch 4, dadurch gekennzeichnet, daß die Kettfäden (3) zumindest vorwiegend aus Aramid bestehen.

## Claims

1. Rolled bale press for hay, straw or similar harvested material, comprising circumferential belts, which surround the roll chamber and serve to rotate the material, said belts being formed substantially from rubber or rubber-like plastics materials and having twisted, filamentary reinforcing members, which extend parallel to one another in the longitudinal direction of the belts and are warp threads (9) of a fabric, which also has weft threads (10) extending transversely relative to the warp threads (9) and being passed-through in an S-shaped manner between the warp threads (9), characterised in that substantially half the number of reinforcing members have one direction of rotation, while the other reinforcing members have the opposite direction of rotation, in that the warp threads (9) are combined in pairs, and the warp threads of one pair have different directions of rotation, and in that the weft threads (10) are each passed-through in an S-shaped manner between two neighbouring pairs of warp threads (9).

2. Press according to claim 1, characterised in that the neighbouring warp threads (9) of different adjacent pairs have different directions of rotation.

3. Press according to claim 1, characterised in that the warp threads (9) are at least predominantly formed from aramide.

4. Belts for a rolled bale press according to claim 1, which are substantially formed from rubber or rubber-like plastics materials and have twisted, filamentary reinforcing members, which extend parallel to one another in the longitudinal direction of the belts and are warp threads (9) of a fabric, which also has weft threads (10) extending transversely relative to the warp threads (9) and being passed-through in an S-shaped manner between the warp threads (9), characterised in that substantially half the number of reinforcing members have one direction of rotation, while the other reinforcing members have the opposite direction of rotation, in that the warp threads (9) are combined in pairs, and the warp threads of one pair have different directions of rotation, and in that the weft threads (10) are each passed-through in an S-shaped manner between two neighbouring pairs of warp threads (9).

5. Belts according to claim 4, characterised in that the neighbouring warp threads (9) of different adjacent pairs have different directions of rotation.

6. Belts according to claim 4, characterised in that the warp threads (9) are at least predominantly formed from aramide.

## Revendications

1. Presse à balles rondes ou cylindriques pour du foin, de la paille ou un autre produit de récolte analogue, comprenant des bandes qui entourent la chambre d'enroulement, qui tournent, qui servent à faire circuler le produit, qui sont essentiellement en caoutchouc ou en matières plastiques analogues à du caoutchouc et qui comportent des éléments ou inserts de renforcement, parallèles entre eux, s'étendant dans la direction longitudinale de la bande, du type retordu et en forme de fil, qui sont les fils de chaîne (9) d'un tissu, lequel comporte également des duites (10) s'étendant transversalement aux fils de chaîne (9) et passant en forme de S entre les fils de chaîne (9), caractérisée en ce que sensiblement la moitié des inserts de renforcement ont un sens de torsion, tandis que les autres inserts de renforcement ont le sens de torsion opposé, en ce que les fils de chaîne sont réunis par paire et les fils de chaîne d'une paire ont des sens de torsion différents et en ce que chaque duite passe en forme de S entre deux paires voisines de fils de chaîne (9).

2. Presse à balles rondes ou cylindriques suivant la revendication 1, caractérisée en ce que les fils de chaîne (9) voisins de paires différentes disposés côte à côte ont des sens de torsion différents.

3. Presse à balles rondes ou cylindriques suivant la revendication 1, caractérisée en ce que les fils de chaîne (9) sont, au moins d'une manière prépondérante, en aramide.

4. Bandes pour une presse à balles rondes ou cylindriques suivant la revendication 1, qui sont essentiellement en caoutchouc ou en matières plastiques analogues à du caoutchouc et qui comportent des inserts de renforcement, parallèles entre eux, s'étendant dans la direction longitudinale de la bande, du type retordu et en forme de fil, qui sont les fils de chaîne (9) d'un tissu, lequel comporte également des duites (10) s'étendant transversalement aux fils de chaîne (9) et passant en forme de S entre les fils de chaîne (9), caractérisés en ce que sensiblement la moitié des inserts de renforcement ont un sens de torsion, tandis que les autres inserts de renforcement ont le sens de torsion opposé, en ce que les fils de chaîne sont réunis par paire et les fils de chaîne d'une paire ont des sens de torsion différents et en ce que chaque duite passe en forme de S entre deux paires voisines de fils de chaîne.

5. Bandes suivant la revendication 4, caractérisés en ce que les fils de chaîne (9) voisins de paires différentes disposées côte à côte ont des sens de torsion différents.

6. Bandes suivant la revendication 4, caractérisés en ce que les fils de chaîne (9) sont, au moins d'une manière prépondérante, en aramide.

*Fig. 1*

*Fig. 2*

*Fig. 3*